# EUROPEAN PATENT SPECIFICATION

(11) **EP 2 315 662 B1**
(45) Date of publication and mention of the grant of the patent: **18.06.2014**
(21) Application number: 08876021.0
(22) Date of filing: 11.08.2008
(51) Int. Cl.: B32B 7/02, B32B 27/02, B32B 27/36, B32B 27/34, B32B 17/04, B32B 27/04, B32B 27/32, B32B 27/08

(54) **FLEXIBLE MULTILAYER ASSEMBLY**
FLEXIBLE, MEHRLAGIGE ANORDNUNG
ENSEMBLE MULTICOUCHES FLEXIBLE

(43) Date of publication of application: 04.05.2011
(73) Proprietor: Goglio Cofibox S.p.A, 22071 Cadorago (IT)
(72) Inventor: VITALE, Antonina, 1-22040 Lurago d'Erba (CO) (IT); LIRONI, Pietro, 1-22100 Como (IT)
(74) Representative: Ciceri, Fabio
(86) International application number: PCT/IT2008/000545
(87) International publication number: WO 2010/018602

(56) References cited:
- US-A- 6 007 245

## Description

The present invention concerns a flexible multilayer assembly having improved properties of mechanical resistance and of tear resistance, as well as of applications thereof in the field of flexible packagings for the packaging of building materials or for food stuff, packaging.

There is known, from the international patent application WO92/01558, a packaging carton box for food products consisting of a laminate having an internal layer and an external layer, that confer rigidity to said laminate, and a midlayer that joins them. According to a preferred embodiment, the packaging carton box comprising the laminate presents the following sequence of layers:
- LDPE,
- a layer of paperboard or grease-proof paper, for imparting stiffness,
- EVOH o polyamide, as an oxygen barrier,
- metallized polymer, such as PET or OPP, for imparting further stiffness,
- LDPE.

Therefore, the laminate described in this document presents both a high stiffness and high oxygen barrier properties, in order for it to be used for the packaging especially of foodstuff and of products similarly sensible to presence of oxygen, or that could be degraded with time.

However, in the case of packagings, especially for materials for the building industry, such as sands and cements, there are required materials that are flexible but at the same time extremely resistant to the applied load, as well as resistant to cutting and to tearing.

From the international patent application WO96/14984, there is known a material consisting of two layers of tissue having both open and closed meshes, among which an adhesive layer is arranged. Both the fabric and the adhesive are of the polyolefine type, and the thus obtained material is then used for the production of bags and similar items. Although the so structured polyethylene turns out to be reinforced as compared with a simple polyethylene film, this material is not suitable for the above-mentioned applications, because it is not capable to offer suitable oxygen barrier properties, nor light and heat protection, if the storage conditions are particularly unfavourable, or for prolonged periods of times.

There is therefore the problem of having packaging materials e.g. for the building industry that are suitable for a prolonged storage, also in unfavourable conditions, having high flexibility and a very light weight, high mechanical resistance, tensile resistance, tear resistance, resistance to free fall impact, high barrier properties to oxygen, water and light.

The object of the present invention is therefore to provide materials having such characteristics.

That object has been achieved through a flexible container as indicated in claim 1.

Further characteristics and advantages of the invention will result from the following detailed description made with reference to the realization examples of the invention provided as non-limitative examples and to the attached figures in which:
- figure 1 represents a perspective view of an embodiment of the multilayer assembly according to the invention;
- figure 2 represents a perspective view of another embodiment of the multilayer assembly according to the invention.

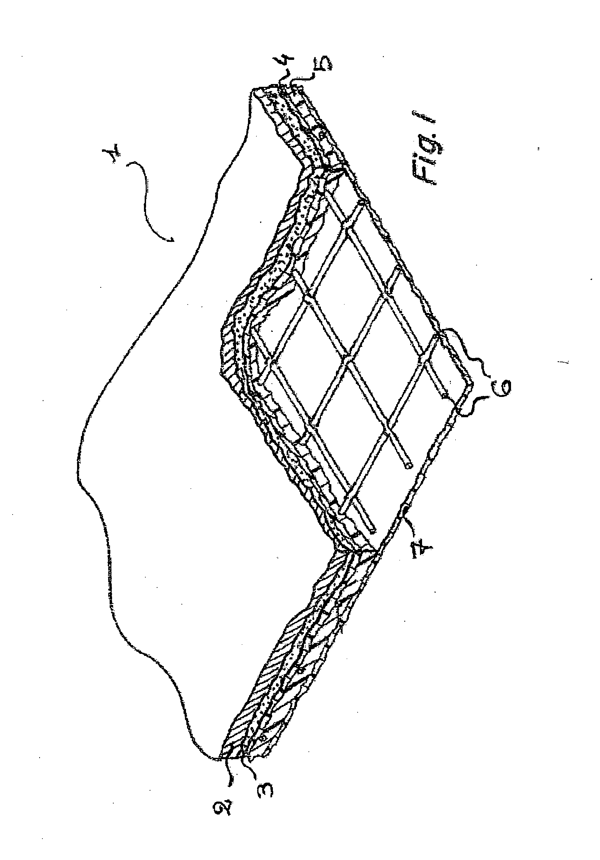

Referring to figure 1, the invention has therefore as an object a flexible container in the form of a sack for the industrial packaging and the storing of building materials or for food stuff packaging, manufactured from a flexible multilayer assembly 1 comprising at least one layer 2 of a polymeric material selected from polypropylene, polyester, polyamide, polyethylene and their mixtures; at least one adhesive layer 3; a metallized layer 4 selected from metallized polypropylene, metallized polyester and metallized polyamide; a first layer 5 of a polyolefine material; at least one open-mesh fabric 6; and at least a second layer 7 of a polyolefine material.

As will be evident from the examples hereinafter reported, the multilayer assembly 1 according to the invention is advantageously resistant and flexible thanks to the proper combination of layers of materials, which are joined between them. This provides a material that, beside very high technical performance, is capable to withstand to high loads with a reduced plastic deformation.

Preferably, the flexible multilayer assembly 1 according to the present invention has a thickness in the range of from 50 µm to 300 µm with surface weight values in the range of from 50 to 250 g/m². These values allow the best compromise between flexibility and mechanical resistance to be reached, while providing a high handiness owing to a very limited weight and an extremely reduced bulkiness.

According to a preferred embodiment, the at least one open-mesh fabric 6 is fabricated from polyester, polyamide, glass or their combinations.

The threads such fabrics are made of are of a thermoplastic polymeric and/or amorphous nature and are used for producing open-mesh fabrics that, after having been coupled into the multilayer assembly of the invention, contribute to further increase the mechanical resistance and at the same time offer a significant action contrasting the expansion of possible tears and cuts.

Preferably, the meshes of the at least one open-mesh fabric 6 have sizes from 0.20 to 20 mm. It has been found, in fact, that meshes of these sizes advantageously do not affect the flexibility of the final multilayer assembly, even though it provides a contribution in increasing the mechanical and tearing resistance.

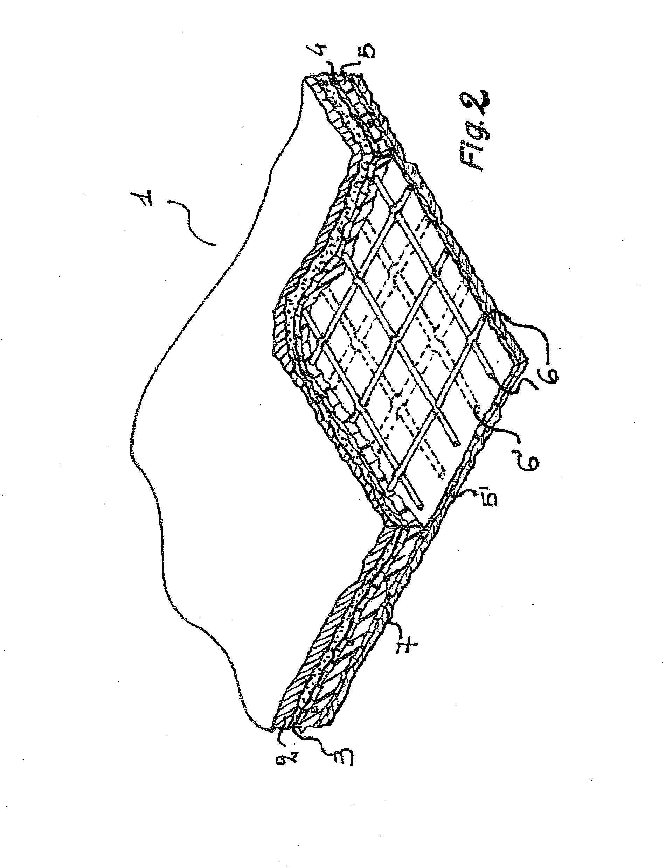

Referring to figure 2, according to an embodiment, the multilayer assembly 1 of the invention comprises at least two open-mesh fabrics 6. In this way, the mechanical resistance aspect is further improved, if this is required by the final application of the multilayer assembly.

According to an embodiment, at least two fabrics have meshes of identical sizes.

Preferably, the meshes of the at least two fabrics are staggered relative to one-another, namely, as clearly shown in figure 2, by observing the multilayer assembly from above, in correspondence with a mesh of a fabric 6 there is a crossing of a another fabric 6'. Preferably, the at least two fabrics are alternately staggered in the multilayer assembly according to the invention so that each crossing of a fabric is almost in correspondence with the centre of the meshes of the other fabric 6'. Preferably, every open-mesh fabric 6 is placed on the first layer 5 of polyolefine material. This advantageously allows the mechanical resistance and the resistance to tearing to be increased in a uniform way in the multilayer assembly, since the contrasting action to the expansion of a possible perforation turns out to be homogenous in any direction.

The metallized layer 4 is chosen among metallized polypropylene, metallized polyester and metallized polyamide. Such metallized layer 4 advantageously presents a high flexibility and high mechanical resistance, and in particular resistance to the impact of a free-falling weight.

According to an embodiment, the metallized layer 4 is obtained by deposition of a metal layer, preferably aluminum, by means of a plasma or vacuum technology.

Preferably, the metallized layer 4 is metallized polyester. Thereby also the oxygen, water and light barrier properties are improved.

The flexible multilayer assembly 1 also comprises at least one adhesive layer, the layer 3 that can be seen in figure 1.

The layer 7 is of a polyolefine material. Preferably, said polyolefine material of layer 7 is polyethylene.

According to a preferred embodiment, the flexible multilayer assembly of invention further comprises a second adhesive layer 3' on the polyolefine material layer and a polyolefine material layer 7' on said adhesive layer 3'. In this way, the characteristics of flexibility and of barrier effect are advantageously improved. Preferably, said polyolefine material of layer 7' is polyethylene.

Adhesives that are suitable for the purposes of the present invention comprise the compounds that can be used in the coupling technologies for flexible packaging, from the polyurethane adhesive system to the most modern lamination systems (electron beam, UV-lamp crosslinking systems). Preferably, in the present invention, the used adhesives are thermosetting polymers, more preferably they are of the polyurethane type. Such adhesives in the same multilayer assembly can be identical to one another, or different.

Under another aspect, the present invention concerns a process for the production of a flexible multilayer assembly, comprising the following steps:
a) providing at least one layer 2 of polymeric material selected from polypropylene, polyester, polyamide, polyethylene, and their mixtures;
b) providing a layer 4 of metallized material selected from metallized polypropylene, metallized polyester and metallized polyamide;
c) coupling said layers 2 and 4 by interposing an adhesive layer 3;
d) depositing a first layer 5 of a polyolefine material;
e) depositing at least one open-mesh fabric 6 onto said polyolefine material layer 5; and
f) depositing at least one second polyolefine material layer 7.

Preferably, the steps d) and e) are carried out by means of surface-extrusion techniques (extrusion coating).

Preferably, the step d) provides for the polyolefine material layer to be directly deposited onto said metallized material layer 4.

Alternatively, the steps d), e) and f) can be carried out separately to form a semi-finished product comprising a first layer 5 of polyolefine material, at least one open-mesh fabric 6 and at least one second layer 7 of polyolefine material. Such semi-finished product can, subsequently, be coupled to the other supplied layers to form the flexible multilayer assembly according to the invention.

The parameters of the above-mentioned process can vary according to the type of material and the coupling technology selected, as is well known to those skilled in the art.

According to a preferred embodiment, the process for the production of a flexible multilayer assembly 1 furthermore comprises the step of:
g) coupling the flexible multilayer assembly of step f) with a layer 7' of a polyolefine material by interposing a second adhesive layer 3' between said polyolefine material layer 7 and said polyolefine material layer 7'.

The present invention concerns flexible containers manufactured from the flexible multilayer assembly 1. Specifically, said flexible containers are sacks for the industrial packaging and the storage of building materials, such as sands and cements. Such containers also find application in the field of foodstuff packaging.

It is to be understood that all the hereinabove described aspects, also preferred and advantageous ones, concerning the flexible multilayer assembly of the invention also apply to its preparation process, as well as to the use of the multilayer assembly itself.

The invention will be now described in detail with reference to illustrative non limiting examples of the production of the flexible multilayer assembly according to the invention, as well as tests for the evaluation of the improved technical characteristics of the same.

### EXAMPLES 1-4

Four multilayer assemblies according to the invention having the following structures have been prepared

| | |
|---|---|
| **Example 1** | - polypropylene (20µm) |
| | - polyurethane |
| | - metallized polyester (12µm) |
| | - polyethylene |
| | - open-mesh fabric (4x4mm) in PET |
| | - polyethylene |
| | - polyurethane |
| | - polyethylene |
| **Example 2** | - polypropylene (20µm) |
| | - polyurethane |
| | - metallized polyester (12µm) |
| | - polyethylene |
| | - open-mesh fabric (8×8mm) in glass fiber |
| | - polyethylene |
| | - polyurethane |
| | - polyethylene |
| **Example 3** | - polypropylene (20µm) |
| | - polyurethane |
| | - metallized polyester (12µm) |
| | - polyethylene |
| | - open-mesh fabric (8x8mm) in PET |
| | - polyethylene |
| | - polyurethane |
| | - polyethylene |
| **Example 4** | - polypropylene (20µm) |
| | - polyurethane |
| | - metallized polyester (12µm) |
| | - polyethylene |
| | - open-mesh fabric (5×5mm) in glass fiber |
| | - polyethylene |
| | - polyurethane |
| | - polyethylene |

The values in "µm" indicate the thickness of the material layer they are referred to. With "PET", we intend the polyethylene terephthalate polymer.

### Example 5 (comparative)

A multilayer assembly according to the teachings of the International patent Application WO92/0155 has been prepared, that is according to the previously indicated preferred embodiment, with the difference that there has not been used the paperboard or grease-proof paper layer.

### Example 6

### Evaluation of technical characteristics of the flexible multilayer assemblies according to the present invention

The following laboratory evaluations have been carried out with the purpose to ascertain the technical parameters obtained on the multilayer assemblies of the invention in comparison with the multilayer assembly of comparative example 5.

In table 1, the result relative to the laboratory tests made on the following multilayer assemblies is reported:

**Table 1**

| | **Example 1** | **Example 2** | **Example 3^{##}** | **Example 4** | **Comparative example 5** |
|---|---|---|---|---|---|
| **Dimensional parameters** | | | | | |
| Multilayer assembly thickness | 240µm | 136µm | 142µm | 178µm | 115 µm |
| Multilayer assembly surface weight | 170 g/m² | 142 g/m² | 150 g/m² | 145 g/m² | 125 g/m² |
| **Physical-mechanical parameters** | | | | | |
| elastic module of the multilayer assembly * | 9100 MPa | 7786 MPa | 9642 MPa | 10890 MPa | 6355 MPa |
| dart test on PKG** theoretical mass of the multilayer assembly (g) | 834 | 746 | >890 | 717 | 665 |
| Tearing resistance (Elmendorf) of the multilayer | Longitudinal 11600 +/-1814 | Longitudinal 5511 +/-261 | Longitudinal 8686 +/- 1928 | Longitudinal 14353 +/-3057 | Longitudinal 2938+/-117 |
| assembly*** | Transversal 12608 +/-2690 | Transversal 11840 +/- 1611 | Transversal 9843 +/- 1569 | Transversal 12757 +/-2395 | Transversal 2834 +/- 104 |
| Resistance to a falling down full bag ## | 31 no breaking | 31 no breaking | 31 no breaking | 31 no breaking | 31 no breaking |
| | 51 no breaking | 51 no breaking | 51 no breaking | 51 no breaking | 51 no breaking |

| | | | | | |
|---|---|---|---|---|---|
| * parameter evaluated with tensile test ** *ball drop* (*dart test*) performed according to norm ASTM 1709:04, by operating on the outline of said norm. The test is performed by subjecting several series, each comprising 10 test pieces measuring 15×15cm, to the impact of a dart, the weight of which is successively increased at each series, from a height of 900mm. The result of the test is expressed as the weight (g) of the dart that is required for breaking 50% of the test pieces of a series (f50); ^{##} in order to obtain an orientation value for the sample, the dart, having a weight of 890 g, has been taken to a releasing height of 1240 mm, whereby the breaking of the film was obtained, which did not occur at 1100 mm. *** tearing resistance (Elmendorf): evaluation of the tearing resistance by means of the "Elmendorf' pendulum according to norm ASTM D 1922:06, which is performed on 10 specific longitudinal test pieces and 10 specific transversal test pieces by means of the ATS-FAAR pendulum equipped with suitable masses. ^{#} horizontal falling resistance from 100cm onto a rigid plane of bags (ca. 45×60 cm) containing 3 1 water e 2 bags (ca. 45×60 cm) containing 5 1 water. The test consists of comparing the performance of the standard structure with that of the laminates of the invention. The bags were manufactured by means of a thermal sealing machine with the temperature set at 100°C and the pressure time at 1 s. | | | | | |

As evidenced by the values recorded in the above table, the multilayer assemblies according to the present invention have improved technical performance under various aspects. In particular, it can be observed that the elastic module values are greater in the case of the multilayer assemblies according to the invention, resulting, therefore, in advantageously being less deformable relative to comparison multilayer assembly. Moreover, the multilayer assemblies of the invention advantageously exhibit an incremented impact resistance, as it can be inferred from the data concerning the dart test experiment, as well as a remarkably higher tearing resistance relative to comparison multilayer assembly.

As can be seen from the above-mentioned examples and from the detailed description, the results achieved by means of the flexible multilayer assembly according to the invention are evident, as it allows extremely significant advantages in terms of increase in performances to be obtained.

In fact, such a material can advantageously be used for packagings, is especially suited for a prolonged storage, also in unfavourable conditions, owing to the fact that it exhibits high flexibility, but reduced deformability, and a very moderate weight, high mechanical resistance, tensile resistance, tear resistance, resistance to the impact of a free-falling weight, high barrier properties to oxygen, to water and light. Moreover, besides very high technical performance, the multilayer assembly of the present invention is suitable to be submitted to advantageously high loads without detachments and flaking between layers to be detected and without permanent set to occur.

The flexible containers manufactured with the multilayer assembly according to the invention can be advantageously provided for different technical sectors, even though they can find a particular convenient application in the packaging of building materials.

## Claims

1. A flexible container in the form of a sack for the industrial packaging and the storing of building materials or for foodstuff packaging, wherein the container is manufactured from a flexible multilayer assembly (1) comprising:
at least one layer (2) of a polymeric material selected from polypropylene, polyester, polyamide, polyethylene and their mixtures;
at least one adhesive layer (3);
a metallized layer (4) selected from metallized polypropylene, metallized polyester and metallized polyamide;
a first layer (5) of a polyolefin material;
at least one open-mesh fabric (6);
and at least a second layer (7) of a polyolefin material.

2. The flexible container according to claim 1, wherein the flexible multilayer assembly (1) has a thickness in the range of from 50 µm to 300 µm and a surface weight in the range of from 50 to 250 g/m².

3. The flexible multilayer container according to claim 1 or 2, in which the at least one open-mesh fabric (6) is fabricated from polyester, polyamide, glass or their combinations.

4. The flexible multilayer container according to any of claims 1 to 3, in which the meshes of the at least one open-mesh fabric (6) have sizes from 0.20 to 20 mm.

5. The flexible multilayer container according to any of claims 1 to 4, comprising at least two open-mesh fabrics (6).

6. The flexible multilayer container according to any of claims 1 to 5, comprising one layer (4) of metallized polyester.

7. The flexible multilayer container according to any of claims 1 to 6, further comprising a second adhesive layer (3') on top of layer (7) of a polyolefin material and a layer (7') of a polyolefin material on top of said adhesive layer (3').

8. The flexible multilayer container according to any of claims 1 to 7, in which said H polyolefin material is polyethylene.

9. The flexible multilayer container according to any of claims 1 to 8, in which said adhesive material is a polyurethane adhesive.

10. A process for the production of a flexible multilayer assembly (1) according to claim 1, comprising the steps of:
a) providing at least one layer (2) of polymeric material selected from polypropylene, polyester, polyamide, polyethylene, and their mixtures;
b) providing a layer (4) of metallized material selected from metallized polypropylene, metallized polyester and metallized polyamide;
c) coupling said layers (2) and (4) by interposing an adhesive layer (3);
d) depositing a first layer (5) of a polyolefin material;
e) depositing at least one open-mesh fabric (6) onto said polyolefin material layer (5); and
f) depositing at least one second polyolefin material layer (7).

11. The process according to claim 10, in which in step d) the first layer (5) of a polyolefin material is deposited directly onto said metallized material layer (4).

12. The process according to claim 10, in which steps d), e) and f) are carried out separately to form a semi-finished product comprising the first layer (5) of polyolefin material, the at least one open-mesh fabric (6) and the at least one second layer (7) of polyolefin material, said semi-finished product being subsequently coupled to the other layers, supplied in steps a) to c).

13. The process according to any of claims 10 to 12, further comprising the steps of:
g) coupling the flexible multilayer assembly of step f) with a layer (7') of a polyolefin material by interposing a second adhesive layer (3') between said polyolefin material layer (7) and said polyolefin material layer (7').

## Patentansprüche

1. Flexibler Behälter in Form eines Sacks für die industrielle Verpackung und die Lagerung von Baumaterial oder für die Nahrungsmittelverpackung, wobei der Behälter aus einer flexiblen, mehrlagigen Anordnung (1) hergestellt ist, umfassend:
wenigstens eine Lage (2) eines polymeren Materials ausgewählt unter Polypropylen, Polyester, Polyamid, Polyethylen und deren Mischungen,
wenigstens eine Klebstofflage (3),
eine metallisierte Lage (4) ausgewählt unter metallisiertem Polypropylen, metallisiertem Polyester und metallisiertem Polyamid,
eine erste Lage (5) eines Polyolefinmaterials,
wenigstens einen offenmaschigen Textilstoff (6),
und wenigstens eine zweite Lage (7) eines Polyolefinmaterials.

2. Flexibler Behälter nach Anspruch 1, wobei die flexible, mehrlagige Anordnung (1) eine Dicke im Bereich von 50 µm bis 300 µm und ein Flächengewicht im Bereich von 50 bis 250 g/m² aufweist.

3. Flexibler mehrlagiger Behälter nach Anspruch 1 oder 2, wobei der wenigstens eine offenmaschige Textilstoff (6) aus Polyester, Polyamid, Glas oder ihren Kombinationen hergestellt ist.

4. Flexibler mehrlagiger Behälter nach einem der Ansprüche 1 bis 3, wobei die Maschen des wenigstens einen offenmaschigen Textilstoffs (6) Größen von 0,20 bis 20 mm aufweisen.

5. Flexibler mehrlagiger Behälter nach einem der Ansprüche 1 bis 4, der wenigstens zwei offenmaschige Textilstoffe (6) umfasst.

6. Flexibler mehrlagiger Behälter nach einem der Ansprüche 1 bis 5, der eine Lage (4) metallisierten Polyesters umfasst.

7. Flexibler mehrlagiger Behälter nach einem der Ansprüche 1 bis 6, der ferner eine zweite Klebstofflage (3') oben auf der Lage (7) eines Polyolefinmaterials und eine Lage (7') eines Polyolefinmaterials oben auf der Klebstofflage (3') umfasst.

8. Flexibler mehrlagiger Behälter nach einem der Ansprüche 1 bis 7, wobei das Polyolefinmaterial Polyethylen ist.

9. Flexibler mehrlagiger Behälter nach einem der Ansprüche 1 bis 8, wobei das Klebstoffmaterial ein Polyurethanklebstoff ist.

10. Verfahren für die Herstellung einer flexiblen mehrlagigen Anordnung (1) nach Anspruch 1, umfassend die Schritte des:
a) Bereitstellens wenigstens einer Lage (2) polymeres Material ausgewählt unter Polypropylen, Polyester, Polyamid, Polyethylen und deren Mischungen,
b) Bereitstellens einer Lage (4) metallisiertes Material ausgewählt unter metallisiertem Polypropylen, metallisiertem Polyester und metallisiertem Polyamid,
c) Verbindens der Lagen (2) und (4) durch dazwischen Eingeben einer Klebstofflage (3),
d) Auflegens einer ersten Lage (5) eines Polyolefinmaterials,
e) Auflegens wenigstens eines offenmaschigen Textilstoffs (6) auf die Polyolefinmateriallage (5), und
f) Auflegens wenigstens einer zweiten Polyolefinmateriallage (7).

11. Verfahren nach Anspruch 10, wobei in Schritt d) die erste Lage (5) eines Polyolefinmaterials direkt auf die metallisierte Materiallage (4) aufgelegt wird.

12. Verfahren nach Anspruch 10, wobei die Schritte d), e) und f) getrennt durchgeführt werden, um ein Halbzeug zu bilden, das die erste Lage (5) Polyolefinmaterial, den wenigstens einen offenmaschigen Textilstoff (6) und die wenigstens eine zweite Lage (7) Polyolefinmaterial umfasst, wobei das Halbzeug daraufhin mit den anderen Lagen, die in den Schritten a) bis c) zur Verfügung gestellt worden sind, verbunden wird.

13. Verfahren nach einem der Ansprüche 10 bis 12, ferner die Schritte umfassend des:
g) Verbindens der flexiblen, mehrlagigen Anordnung aus Schritt f) mit einer Lage (7') eines Polyolefinmaterials durch Eingeben einer zweiten Klebstofflage (3') zwischen die Polyolefinmateriallage (7) und die Polyolefinmateriallage (7').

## Revendications

1. Contenant souple ayant la forme d'un sac pour le conditionnement industriel et le stockage de matériaux de construction ou pour le conditionnement d'aliments, dans lequel le contenant est fabriqué à partir d'un ensemble multicouche souple (1) comprenant:
au moins une couche (2) d'un matériau polymère choisi parmi un polypropylène, un polyester, un polyamide, un polyéthylène et leurs mélanges ;
au moins une couche adhésive (3) ;
une couche métallisée (4) choisie parmi un polypropylène métallisé, un polyester métallisé et un polyamide métallisé ;
une première couche (5) d'un matériau polyoléfinique ;
au moins un tissu à mailles ouvertes (6) ;
et au moins une seconde couche (7) d'un matériau polyoléfinique.

2. Contenant souple selon la revendication 1, dans lequel l'ensemble multicouche souple (1) a une épaisseur comprise dans la plage allant de 50 µm à 300 µm et un poids superficiel compris dans la plage allant de 50 à 250 g/m².

3. Contenant multicouche souple selon la revendication 1 ou 2, dans lequel l'au moins un tissu à mailles ouvertes (6) est fabriqué à partir de polyester, de polyamide, de verre ou de leurs combinaisons.

4. Contenant multicouche souple selon l'une quelconque des revendications 1 à 3, dans lequel les mailles de l'au moins un tissu à mailles ouvertes (6) ont des tailles de 0,20 à 20 mm.

5. Contenant multicouche souple selon l'une quelconque des revendications 1 à 4, comprenant au moins deux tissus à mailles ouvertes (6).

6. Contenant multicouche souple selon l'une quelconque des revendications 1 à 5, comprenant une couche (4) de polyester métallisé.

7. Contenant multicouche souple selon l'une quelconque des revendications 1 à 6, comprenant en outre une seconde couche adhésive (3') sur le dessus de la couche (7) d'un matériau polyoléfinique et une couche (7') d'un matériau polyoléfinique sur le dessus de ladite couche adhésive (3').

8. Contenant multicouche souple selon l'une quelconque des revendications 1 à 7, dans lequel ledit matériau polyoléfinique est un polyéthylène.

9. Contenant multicouche souple selon l'une quelconque des revendications 1 à 8, dans lequel ledit matériau adhésif est un adhésif de polyuréthane.

10. Procédé de production d'un ensemble multicouche souple (1) selon la revendication 1, comprenant les étapes consistant à :
a) fournir au moins une couche (2) d'un matériau polymère choisi parmi un polypropylène, un polyester, un polyamide, un polyéthylène et leurs mélanges ;
b) fournir une couche (4) de matériau métallisé choisi parmi un polypropylène métallisé, un polyester métallisé et un polyamide métallisé ;
c) coupler lesdites couches (2) et (4) en intercalant une couche adhésive (3) ;
d) déposer une première couche (5) d'un matériau polyoléfinique ;
e) déposer au moins un tissu à mailles ouvertes (6) sur ladite couche de matériau polyoléfinique (5) ; et
f) déposer au moins une seconde couche de matériau polyoléfinique (7).

11. Procédé selon la revendication 10, dans lequel dans l'étape d), la première couche (5) d'un matériau polyoléfinique est déposée directement sur ladite couche de matériau métallisé (4).

12. Procédé selon la revendication 10, dans lequel les étapes d), e) et f) sont réalisées séparément pour former un produit semi-fini comprenant la première couche (5) de matériau polyoléfinique, l'au moins un tissu à mailles ouvertes (6) et l'au moins une seconde couche (7) de matériau polyoléfinique, ledit produit semi-fini étant ensuite couplé aux autres couches, fournies dans les étapes a) à c).

13. Procédé selon l'une quelconque des revendications 10 à 12, comprenant en outre les étapes consistant à :
g) coupler l'ensemble multicouche souple de l'étape f) avec une couche (7') d'un matériau polyoléfinique en intercalant une seconde couche adhésive (3') entre ladite couche de matériau polyoléfinique (7) et ladite couche de matériau polyoléfinique (7').
